## Europäisches Patentamt
## European Patent Office
## Office européen des brevets

(19)

(11) Numéro de publication: **0 294 306**
**A1**

(12)

# DEMANDE DE BREVET EUROPEEN

(21) Numéro de dépôt: **88440041.7**

(22) Date de dépôt: **31.05.88**

(51) Int. Cl.⁴: **B 65 D 90/00**
B 65 D 88/12, B 60 P 7/13

(30) Priorité: **03.06.87 FR 8707856**

(43) Date de publication de la demande:
**07.12.88 Builetin 88/49**

(84) Etats contractants désignés:
**AT BE CH DE ES GB GR IT LI LU NL SE**

(71) Demandeur: **LOHR INDUSTRIE**
**29, rue du 14 Juillet**
**F-67980 Hangenbieten (FR)**

(72) Inventeur: **Donnard, René**
**8, rue des Violettes**
**F-67400 Geispolsheim (FR)**

(74) Mandataire: **Metz, Paul**
**Cabinet METZ PATNI 95, rue de la Ganzau**
**F-67100 Strasbourg (FR)**

(54) **Bloc de verrouillage à verrou escamotable et intégré pour structure porte-charge.**

(57) Bloc de verrouillage à verrou escamotable intégré pour la manipulation, le transport et le stockage par empilement de structures porte-charges.

Bloc de verrouillage caractérisé en ce qu'il comprend sur trois faces adjacentes dont la face inférieure une ouverture oblongue (10) pour le verrouillage à l'aide de verrou normalisé et en ce qu'il renferme un dispositif de verrou (1) escamotable solidaire d'un support mobile (12) à tête de verrouillage (11) entre une position escamotée à l'intérieur du bloc dans laquelle la sous-face du support est dans le plan de la face supérieure du bloc et une position sortie de travail dans laquelle la platine d'appui (17) portant la tête de verrouillage est en prolongement de la face supérieure du bloc.

Cette invention intéresse les constructeurs de conteneurs et de matériel de transport.

FIG. 1

EP 0 294 306 A1

## Description

### Bloc de verrouillage à verrou escamotable et intégré pour structure porte-charges

La présente invention se rapporte à un bloc de verrouillage escamotable et intégré pour la manipulation, le transport et le stockage de conteneurs-palettes, plateaux porte-charges et autres supports de charges.

Cette invention trouve son application dans le domaine des transports routiers mais aussi celui des transports maritimes dans lequel les supports de charges sont maintenus sur les châssis ou planchers porteurs par l'intermédiaire d'une liaison rapide à l'aide de pièces de coins appelées coins "ISO" en raison des caractéristiques normalisées dont ils ont fait l'objet.

Divers matériels et dispositifs de supports de charges tels que conteneurs, notamment conteneurs-palettes, plates-formes diverses, plateaux porte-charges, châssis rapportés... sont solidarisés aux structures porteuses par des organes de liaison à solidarisation et désolidarisation rapides mettant en oeuvre un bloc d'angle pourvu d'évidements ou de passages récepteurs dans lesquels vient s'encastrer une tête pivotante de verrouillage portée par un dispositif de verrou solidarisé à la structure porteuse.

Or, les structures porte-charges du genre plateau, plate-forme, conteneur ou autre, sont réalisées amovibles pour permettre d'enlever la charge de la structure porteuse sans la déposer et de bénéficier ainsi de toute l'indépendance mécanique nécessaire à une bonne rentabilité du transport et des véhicules porteurs.

Cette indépendance permet aux structures porte-charges d'être stockées par empilement les unes sur les autres, plateaux sur plateaux, et d'être transportées ainsi en retour à vide par un seul véhicule porteur.

Or, l'épaisseur du tablier avant portant l'organe de préhension de la plate-forme ne permet pas une superposition exacte bord à bord des plateaux et le décalage ainsi observé rend impossible la coïncidence nécessaire entre les ouvertures de verrouillage des blocs d'angle homologues pour la solidarisation par les têtes de verrouillage des dispositifs de verrou situés en dessous. Il faut donc non seulement disposer en regard les têtes de verrouillage et les ouvertures de verrouillage des blocs d'angle supérieurs mais aussi pouvoir escamoter facilement la tête de verrouillage dans le plan porteur.

On connaît des dispositifs de verrou à tête escamotable par rabattement laissant parfaitement libre et plane la surface supérieure du bloc dans lequel ils sont rabattus.

Malheureusement, les éléments de manoeuvre de la tête en mouvement de rabattement et en mouvement de verrouillage sont distincts et situés, pour le premier, sur une des faces latérales et, pour le second, sous le bloc dans lequel la tête s'escamote.

L'utilisation de tels dispositifs de verrou s'avère quasi impossible à l'emplacement envisagé en décalage au-dessous des blocs d'angle en raison de la gêne et même de l'impossibilité de manoeuvre des éléments de commande.

Par ailleurs, tous les blocs de verrouillage adaptables de façon amovible à l'arrière d'une structure porteuse ne conviennent pas en raison des multiples inconvénients, rangements, pertes, temps de montage, découlant du caractère détachable de ces blocs.

Les constructeurs ont cherché à intégrer dans le plateau de la structure porteuse des éléments mécaniques escamotables qui portent chacun en extrémité une tête de verrouillage.

Ces éléments sont réalisés, par exemple, sous la forme de pattes ou de bras articulés venant s'escamoter par pivotement en position de repos dans des logements jusqu'à un niveau suffisant pour présenter une sous-face disposée dans le plan du plateau porteur pour faire disparaître toute saillie par rapport à la face de chargement.

Chaque bras présente une extrémité libre décalée vers l'extérieur et porte une tête de verrouillage disposée de telle façon qu'elle coïncide avec le coin homologue de blocage de la plate-forme superposée située immédiatement au-dessus.

Si ces dispositifs répondent dans leur principe aux objectifs de la présente invention, ils nécessitent la réalisation d'une plate-forme spécifique à leur intégration dont la construction s'avère plus complexe. Par ailleurs, l'augmentation de masse et l'encombrement constituent autant d'inconvénients supplémentaires.

La présente invention a pour but de remédier à ces inconvénients en proposant un bloc de verrouillage à verrou escamotable et intégré, essentiellement pratique et totalement compatible avec les pièces standard existant actuellement.

A cet effet, l'invention se rapporte à un bloc de verrouillage pour la solidarisation de deux structures porteuses en superposition verticale caractérisé en ce qu'il comprend sur chacune d'au moins trois de ses faces adjacentes, dont la face inférieure, une ouverture oblongue pour le verrouillage à l'aide d'un verrou normalisé et en ce qu'il renferme un dispositif de verrou escamotable solidaire d'un support portant, sur une platine d'appui, une tête de verrouillage, support mobile entre une position escamotée de repos à l'intérieur du bloc dans laquelle la sous-face du support est à ras avec la face supérieure du bloc et une position sortie de travail dans laquelle la platine d'appui est en prolongement de la face supérieure du bloc.

Outre les deux conditions générales d'emplacement de la tête de verrouillage d'une part au droit du coin d'extrémité décalé de la structure porteuse supérieure et d'autre part en position escamotée sans saillie par rapport à la face de chargement, le bloc de verrouillage selon l'invention présente de nombreux avantages dont on ne citera ci-après que les principaux.

. Très faible encombrement par rapport aux dimensions des structures porteuses : plates-formes, conteneurs ou autres.

. L'ensemble escamoté s'inscrit dans le volume du coin de verrouillage.

. Il s'intègre parfaitement dans l'environnement mécanique des plates-formes et remplit simultanément les deux fonctions essentielles de verrouillage vers le haut et de structures réceptrices vers le bas.

. La masse supplémentaire apportée est réduite.

. La face supérieure du coin est fermée et dans le plan de la face de chargement lorsque le dispositif de verrou est escamoté.

. Intégration mécanique parfaite dès la construction.

Les caractéristiques techniques et d'autres avantages sont consignés dans la description qui suit, effectuée à titre d'exemple non limitatif sur un mode d'exécution de l'invention en référence aus dessins annexés dans lesquels :

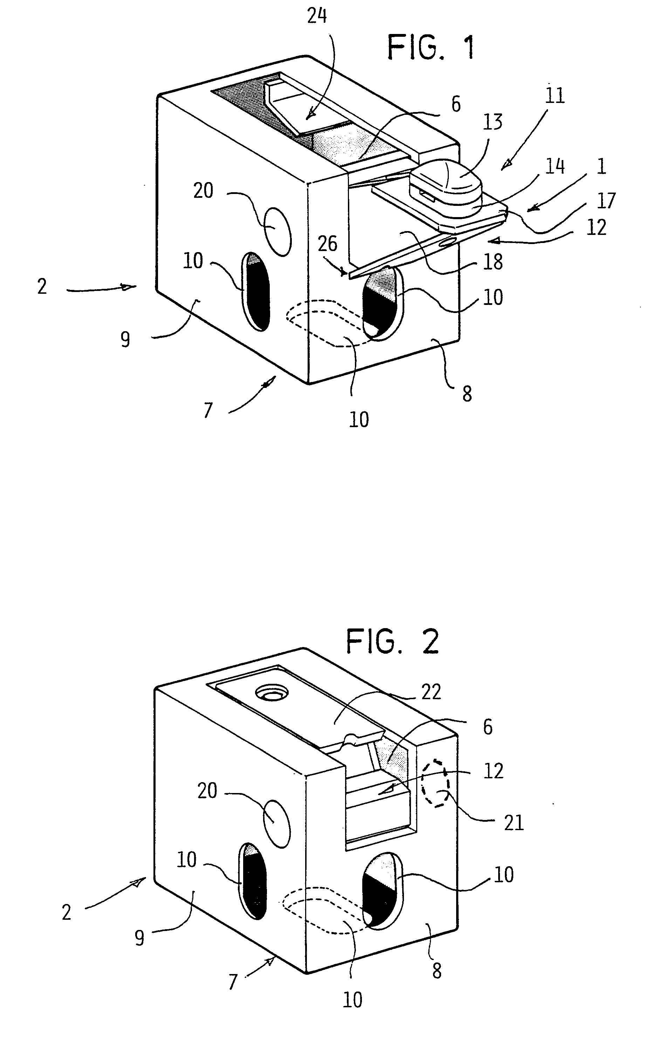

. la figure 1 est une vue en perspective d'un bloc de verrouillage conforme à l'invention, dispositif de verrou en position sortie ;

. la figure 2 est une vue en perspective d'un bloc de verrouillage conforme à l'invention, dispositif de verrou en position escamotée ;

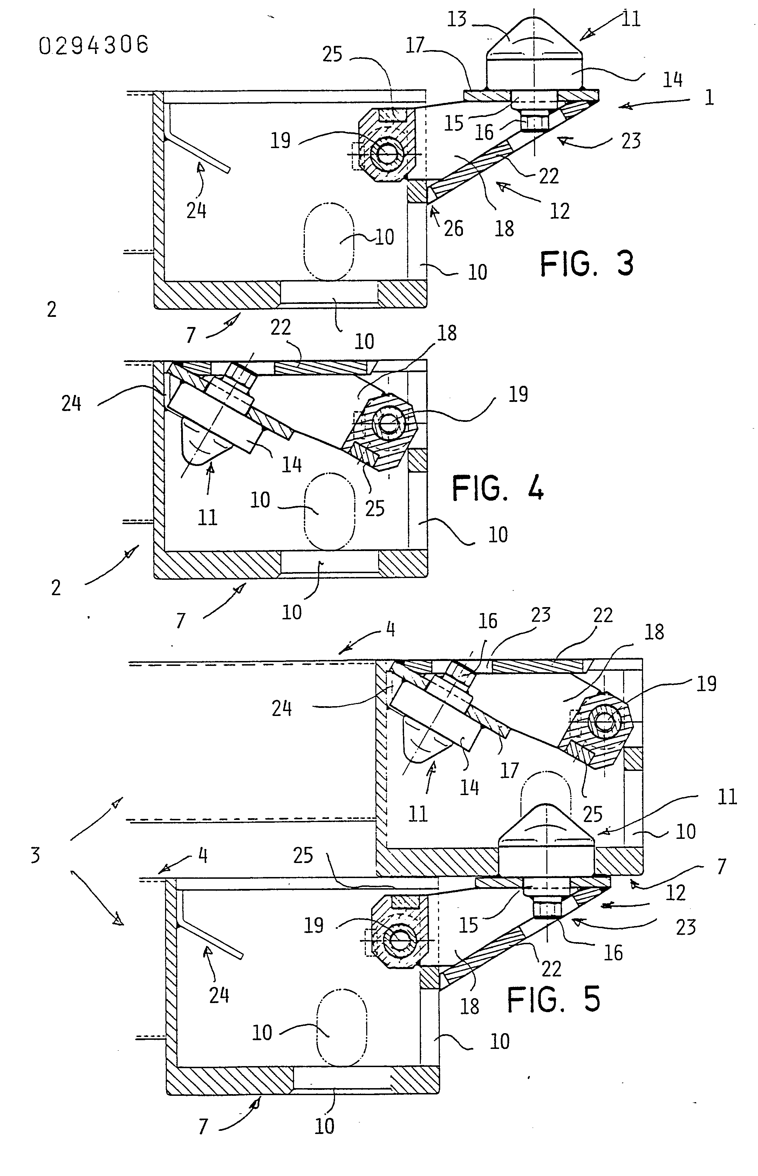

. la figure 3 est une vue en coupe longitudinale, verrou en position opérante ;

. la figure 4 est une vue en coupe transversale ;

. la figure 5 est une vue en coupe longitudinale des extrémités de deux structures porteuses en empilement vertical, solidarisées entre elles à l'état verrouillé.

Selon l'invention, un dispositif de verrou 1 est incorporé à un bloc 2 à monter, habituellement mais non exclusivement, à l'extrémité d'une structure porteuse, par exemple une plate-forme amovible de chargement 3 en prolongation de sa face de chargement 4.

En raison de ses dimensions extérieures, ce bloc s'intègre parfaitement au châssis de la structure porteuse dans la prolongation de la face de chargement 4, comme on peut le constater sur la figure 5.

Le bloc présente un volume intérieur creux 6 et comporte sur au moins trois de ses faces adjacentes dont la face inférieure 7 et deux de ses faces latérales 8 et 9 des ouvertures oblongues telles que 10, normalisées dans lesquelles pénètre la tête de solidarisation du dispositif classique de verrouillage appelé communément "twist lock" du plateau inférieur dans l'empilement.

Les dimensions des faces comportant les ouvertures 10 et le centrage de ces ouvertures sont choisis de telle façon que cette partie du bloc de verrouillage selon l'invention est identique en tous points au coin de verrouillage classique et normalisé, utilisé couramment sur les tructures porteuses classiques telles que plates-formes, conteneurs-palettes...

On retrouve ainsi les avantages et la commodité d'emploi des coins de verrouillage normalisés.

Le bloc 2 renferme dans la partie supérieure de son volume creux 6 le dispositif de verrou 1 à tête pivotante de verrouillage 11, verrou monté sur un support rabattable 12 articulé sur le bloc 2 entre une position escamotée dans laquelle il occupe une partie du volume intérieur dudit bloc et une position sortie ou opérante dans laquelle la tête de verrouillage 11 se présente selon une direction générale parallèle aux faces latérales du bloc 2.

Dans une version préférée, la tête de verrouillage 11 est celle des dispositifs de verrouillage connus sous la dénomination "twist lock" avec sa pyramide supérieure de centrage 13, son carter de protection 14 et son axe de pivotement 15 terminé par un écrou 16 à tête hexagonale pour la manoeuvre de pivotement.

La tête de verrouillage est montée sur une platine d'appui 17 solidaire d'une console 18 réalisée pivotante autour d'un axe de rabattement 19 maintenu par des flasques 20 et 21 solidaires des parois du bloc.

La console 18 est terminée par une face oblique constituée par une plaque de fermeture 22 traversée par une ouverture 23 donnant accès à l'écrou de manoeuvre de la tête de verrouillage.

Les dimensions de la console 18 et l'inclinaison de la plaque de fermeture 22 sont telles que ladite plaque de fermeture occupe une position coïncidant avec la face supérieure du bloc 2 lorsque le dispositif de verrou est rabattu complètement à l'intérieur du bloc 2.

En vue d'immobiliser le support 12 dans cette position on a prévu à l'intérieur du bloc 2 une plaque-butée inclinée 24 décalée sur laquelle vient se bloquer la tête de verrouillage après rotation d'un quart de tour, ladite plaque-butée 24 lui servant de verrou.

Le maintien en position sortie est assuré d'une part par la butée d'un taquet 25 contre les bords de l'ouverture de sortie du support 12 et d'autre part par la butée du chant transversal inférieur 26 de la plaque de fermeture 22 contre la face latérale adjacente du bloc 2. Dans cette position, la platine d'appui 17 se trouve dans l'exact prolongement de la face de chargement 4 qui coïncide avec la face supérieure du bloc 2.

La position décalée de la tête de verrouillage par rapport au bloc de verrouillage 2 permet le verrouillage en position superposée décalée par exemple de plates-formes à tablier ou, plus généralement, de toutes autres structures porteuses de dimensions supérieures à un gabarit de base.

Le bloc de verrouillage 2 selon l'invention s'incorpore facilement à toute structure de platelage pour constituer un organe de liaison et de verrouillage de part et d'autre d'une structure porteuse.

La solidarisation à un châssis porteur s'effectue par une liaison de verrouillage traversant l'ouverture inférieure pour la configuration de transport en charge.

Le dispositif de verrouillage étant escamoté, aucune structure saillante n'encombre le plan de chargement.

En configuration d'empilement, le maintien et le verrouillage des structures de chargement les unes aux autres résultent du rabattement en position sortie du dispositif de verrou dont la tête de verrouillage 11 se trouve en parfaite correspondance avec l'ouverture oblongue de la face inférieure du bloc de verrouillage supérieur homologue. Le passage à travers cette ouverture et le blocage par la rotation d'un quart de tour de la tête de verrouillage assurent le verrouillage.

Bien entendu, les diverses variantes évidentes, les modifications, adjonctions, suppressions et substitutions évidentes et sans apport inventif entrent dans le cadre de la présente invention.

## Revendications

1. Bloc de verrouillage pour la manipulation, le transport et le stockage par empilement de plates-formes de chargement de conteneurs palettes et autres supports de charge, caractérisé en ce qu'il comprend sur chacune d'au moins trois de ses faces adjacentes, dont la face inférieure (7), une ouverture oblongue (10) pour le verrouillage par des verrous du type connu sous la dénomination "twist lock" et en ce qu'il renferme un dispositif de verrou (1) escamotable porté par un support (12) à platine d'appui (17) portant une tête de verrouillage (11), support mobile entre une position rentrée de repos dans laquelle la sous-face du support est à ras avec la face supérieure du bloc et une position sortie de travail dans laquelle la platine d'appui (17) portant la structure de verrouillage est dans le prolongement de la face supérieure du bloc.

2. Bloc selon la revendication 1, caractérisé en ce que le support est pivotant autour d'un axe transversal (19) parallèle aux faces inférieure et supérieure.

3. Bloc selon les revendications 1 et 2, caractérisé en ce que le support (12) est formé de la platine d'appui (17) portant sur la structure de verrouillage (12) et d'une console (18) terminée par une plaque de fermeture (22) inclinée par rapport aux faces du bloc.

4. Bloc selon l'une quelconque des revendications de 1 à 3, caractérisé en ce que la tête de verrouillage est pivotante.

5. Bloc selon l'une quelconque des revendications de 1 à 4, caractérisé en ce que le bloc renferme une plaque-butée (24) qui limite la course de rabattement du support à l'intérieur du bloc jusqu'à une position limite dans laquelle la plaque de fermeture (22) coïncide parfaitement avec la face supérieure.

6. Bloc selon la revendication 5, caractérisé en ce que la plaque-butée est décalée et sert de verrou d'immobilisation à la tête de verrouillage.

0294306

FIG. 1

FIG. 2

0294306

FIG. 3

FIG. 4

FIG. 5

Office européen
des brevets

**RAPPORT DE RECHERCHE EUROPEENNE**

Numero de la demande

EP 88 44 0041

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-2 134 080 (CLIVE-SMITH)<br>* En entier *<br>--- | 1,2,4 | B 65 D 90/00<br>B 65 D 88/12<br>B 60 P 7/13 |
| X | GB-A-2 173 537 (CLIVE-SMITH)<br>* En entier * | 1,2,4 | |
| A | | 5 | |
| A | ---<br>GB-A-2 166 184 (BLAIR P.L.C.)<br>* En entier *<br>----- | 1 | |

DOMAINES TECHNIQUES RECHERCHES (Int. Cl.4)

B 65 D
B 60 P

Le présent rapport a été établi pour toutes les revendications

| Lieu de la recherche | Date d'achèvement de la recherche | Examinateur |
|---|---|---|
| LA HAYE | 25-08-1988 | OSTYN T.J.M. |